# EUROPÄISCHE PATENTSCHRIFT

(11) **EP 1 410 852 B1**
(45) Veröffentlichungstag und Bekanntmachung des Hinweises auf die Patenterteilung: **19.04.2006**
(21) Anmeldenummer: 02023330.0
(22) Anmeldetag: 18.10.2002
(51) Int. Cl.: B08B 7/00, B44D 3/16

(54) **Verfahren und Vorrichtung zum Entfernen einer Lackschicht auf Polymerbasis**
Method and apparatus for the removal of a polymer-based layer of paint
Méthode et appareil pour l'enlèvement d'une couche de peinture à base de polymères

(43) Veröffentlichungstag der Anmeldung: 21.04.2004
(73) Patentinhaber: Plasma Treat GmbH, 33803 Steinhagen (DE)
(72) Erfinder: Buske, Christian, 33803 Steinhagen (DE); Förnsel, Peter, 32139 Spenge (DE); Ries, Wilfried, Wolverhampton, WV6 0HX (GB)
(74) Vertreter: Rox, Thomas

(56) Entgegenhaltungen:
- EP-A- 1 170 066
- WO-A-01/43512
- US-A- 5 789 755

## Beschreibung

Die vorliegende Erfindung betrifft ein Verfahren zum Entfernen einer Lackschicht auf Polymerbasis von der Oberfläche einer Fassade oder einer Wand, sowie eine Vorrichtung zur Durchführung dieses Verfahrens.

Das Entfernen eines Lackauftrags auf Polymerbasis von einer Oberfläche erweist sich häufig als problematisch, da der Lack gewöhnlich hartnäckig auf dem Untergrund haftet. Insbesondere stellt sich dieses Problem beim Entfernen von Farbaufträgen, z.B. von Graffiti, von Fassaden und Wandflächen von Häusern, Gebäuden und dergleichen. Durch mechanische Reinigungsmittel in Verbindung mit Wasser und Detergenzien ist die Farbe nur äusserst mühsam oder gar nicht zu entfernen. Selbst wenn ein begrenzter Reinigungserfolg eintritt, verbleiben häufig sichtbare Spuren auf der Fassade. Erfolgversprechender ist der Einsatz lösungsmittelhaltiger Substanzen, doch deren Verwendung ist unter dem Gesichtspunkt des Umweltschutzes problematisch und birgt zudem die Gefahr, dass die Fassadenoberfläche angegriffen und beeinträchtigt wird. Schliesslich ist der Reinigungsvorgang auch in diesem Fall sehr zeitaufwendig und führt nicht immer zu einer vollständigen und spurlosen Entfernung der Lackschicht.

Aus der EP 1 170 066 A1 ist eine Vorrichtung mit einer Plasmadüse und einer Halterung bekannt, wobei die Halterung die Plasmadüse so positioniert, dass die Plasmadüse eine Relativbewegung zum zu behandelnden Werkstück ausüben kann.

Aufgabe der vorliegenden Erfindung ist es daher, ein Verfahren zum Entfernen einer Lackschicht auf Polymerbasis von einer Fassaden- oder Wandoberfläche zu schaffen, welches effizienter ist als die bekannten Verfahren und somit die Lackschicht zuverlässiger entfernt, gleichzeitig jedoch die Oberfläche selbst schonender behandelt und mit geringerem Arbeitsaufwand durchzuführen ist.

Diese Aufgabe wird erfindungsgemäss dadurch gelöst, dass die Lackschicht durch einen auf die Oberfläche gerichteten Strahl eines atmosphärischen Plasmas verascht wird.

Ein solcher atmosphärischer Plasmastrahl lässt sich durch eine Plasmadüse erzeugen, wie sie beispielsweise aus der DE 195 32 412 C2 sowie aus einer Reihe weiterer Konstruktionen bekannt ist. Solche Plasmadüsen erzeugen einen Strahl eines relativ kühlen atmosphärischen Plasmas, welches eine relativ niedrige Temperatur aufweist und eine hohe Konzentration an chemisch hochreaktiven Ionen, radikalen und angeregten Atomen und Molekülen enthält. Es neigt daher stark dazu, mit der behandelten Oberflächenschicht eine chemische Reaktion einzugehen, durch welche diese zerstört werden kann. Die Anwendbarkeit des erfindungsgemäßen Verfahrens beruht darauf, daß ein Polymer durch das Plasma vollständig verascht werden kann, d. h., das Polymermaterial wird durch die chemische Reaktion zersetzt. Besteht die zu behandelnde Oberfläche selbst aus einem anorganischen Material, so wird sie durch den Plasmastrahl nicht angegriffen, so daß lediglich die Polymer-Schicht verascht wird und restlos entfernt werden kann, während die Gefahr von Beschädigungen, Verfärbungen oder dergleichen ausgeschlossen ist. Insbesondere eignet sich das erfindungsgemäße Verfahren daher zum Reinigen von Fassaden und Hauswänden von Lackschichten auf Polymerbasis.

Gegenüber dem bekannten Reinigungsverfahren ist das erfindungsgemäße Verfahren erheblich effizienter und gewährleistet eine schonende Behandlung der zu reinigenden Oberflächen, da auf die Verwendung aggressiver chemischer Lösungsmittel und mechanischer Reinigungsvorrichtungen vollständig verzichtet werden kann. Der Lackauftrag läßt sich somit schonend und spurlos von der Fassade entfernen.

Vorzugsweise wird der Plasmastrahl durch eine Hochfrequenzentladung in einer verdrallten Strömung eines Arbeitsgases erzeugt. Bei diesem handelt es sich beispielsweise um Luft oder Argon. Versuche haben gezeigt, daß der Veraschungsprozeß bei der Verwendung von Argon besonders effizient abläuft, so daß eine besonders gründliche Reinigung durchgeführt werden kann.

In einer bevorzugten Ausführungsform des Verfahrens wird ein Additiv in den Plasmastrahl eingespeist, welches dazu dient, die Veraschungsreaktion zu unterstützen. Es ist beispielsweise aus der WO 01/32949 A1 bekannt, durch das Einspeisen eines Precursor-Materials eine Abscheidungsreaktion herbeizuführen und eine Oberfläche zu beschichten. Im vorliegenden Fall findet eine chemische Reaktion des Additivs mit der Polymerschicht statt, die das Ablösen der Schicht und somit die Veraschungsreaktion fördert. Bei dem Additiv kann es sich um eine vernebelte Flüssigkeit handeln.

In einer bevorzugten Ausführungsform des Verfahrens wird zumindest eine Plasmadüse zur Erzeugung eines Plasmastrahls streifenweise über die Oberfläche hinwegbewegt. Diese Bewegung kann vorzugsweise auf solche Weise ausgeführt werden, daß die Düse jeweils nach dem Abtasten eines Streifens quer zur Abtastrichtung maximal um eine Streifenbreite versetzt wird und die Abtastrichtung anschließend umgekehrt wird. Es handelt sich somit um eine Hin- und Herbewegung, bei welcher bei jeder Richtungsumkehr ein Versatz der Düse um höchstens eine Streifenbreite durchgeführt wird. Durch diese Bewegung läßt sich ein Oberflächenareal effizient streifenweise von der Lackschicht befreien.

Vorzugsweise wird der Abstand der Düse von der Oberfläche durch einen Abstandssensor gemessen, dessen Signal zur Abstandsregelung verwendet werden kann. Weiter vorzugsweise läßt sich die Färbung des Plasmastrahls im Reaktionsbereich durch einen Farbsensor analysieren, und die Bewegung der Düse, die Intensität des Plasmastrahls und/oder der Abstand der Düse von der Oberfläche werden in Abhängigkeit von der Verfärbung geregelt. Hierbei wird der Umstand ausgenutzt, daß sich die Farbe der Plasmaflamme während des Veraschungsvorgangs ändert. Es läßt sich somit feststellen, ob in der Flamme augenblicklich eine chemische Reaktion stattfindet, die zu dem Veraschen führt. Die Beobachtung dieses Farbumschlags kann somit zur Steuerung des Verfahrens genutzt werden.

Eine Vorrichtung zur Durchführung des erfindungsgemäßen Verfahrens wird in den Unteransprüchen 8 bis 14 beschrieben.

Im folgenden werden bevorzugte Ausführungsformen der Erfindung anhand der Zeichnung näher erläutert.
- Figur 1: zeigt einen Querschnitt durch eine Vorrichtung zur Durchführung des erfindungsgemäßen Verfahrens;
- Figur 2: zeigt eine schematische Darstellung einer Halterung der erfindungsgemäßen Vorrichtung:
- Figur 3: ist eine Seitenansicht der Anordnung aus Figur 2; und
- Figur 4: zeigt eine weitere Ausführungsform der erfindungsgemäßen Vorrichtung aus einer Perspektive entsprechend Figur 3.

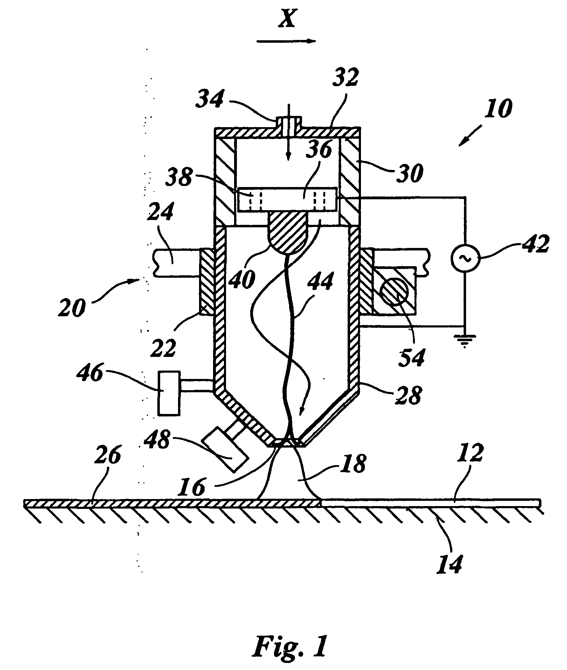

Figur 1 zeigt eine Plasmadüse 10, die zum Entfernen einer Lackschicht 12 auf Polymerbasis von der Oberfläche 14 einer Fassade oder einer Wand ausgebildet ist. Bei der Wand kann es sich beispielsweise um eine Gebäudewand aus einem mineralischen Material wie etwa Stein handeln. Die Oberfläche 14 kann jedoch auch aus Metall oder einem anderen anorganischen Material bestehen. Die Plasmadüse 10 selbst ist bekannt und wird beispielsweise in der EP 1 170 066 A1 ausführlich beschrieben. Auf Einzelheiten des Aufbaus der Plasmadüse 10 und auf deren Funktionsweise soll im folgenden noch näher eingegangen werden.

Die Mündung 16 der Plasmadüse 10 ist der mit der Lackschicht 12 versehenen Oberfläche 14 zugewandt und von dieser beabstandet, so daß der aus der Mündung 16 austretende Plasmastrahl 18 auf die Oberfläche 14 gerichtet ist. Im Plasmastrahl 18 herrscht eine relativ niedrige Temperatur von beispielsweise 500° bis 1500° C, und er enthält eine hohe Konzentration chemisch hochreaktiver Ionen, Radikalen und angeregten Atomen und Molekülen. Die Lackschicht 12 kann somit durch den auftreffenden Plasmastrahl 18 verascht werden, d. h.. es findet eine chemische Reaktion statt, die die Schicht zersetzt, so daß sie sich von der Oberfläche 14 löst. Besteht diese, wie oben beschrieben, aus einem anorganischen Material, so besteht keine Gefahr der Beeinträchtigung der Oberfläche 14 durch den Plasmastrahl 18.

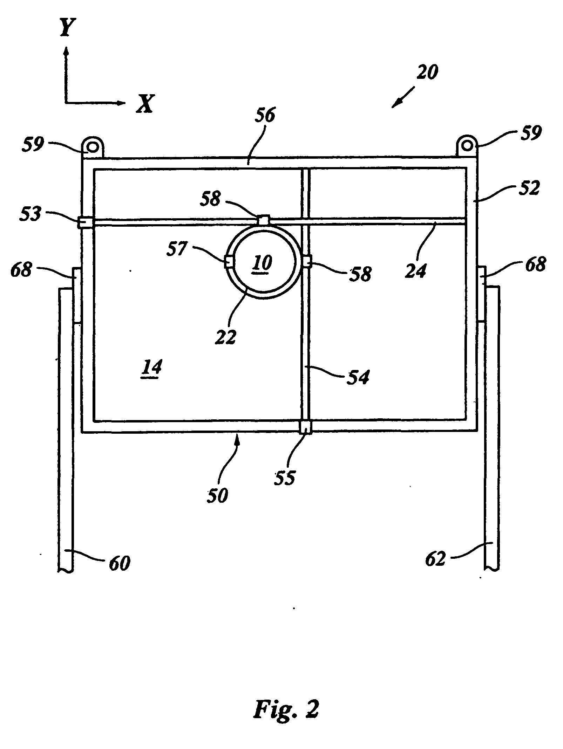

Soll ein größerer Oberflächenbereich von der Schicht 12 befreit werden, so empfiehlt sich eine streifenweise Bearbeitung der Oberfläche 14. Die Plasmadüse 10 wird zu diesem Zweck in einem Halter 20 gehalten, durch welchen die Düse in einer Ebene über die Oberfläche 14 hinweg bewegt werden kann. Dieser Halter 20, auf dessen Bestandteile im Zusammenhang mit den folgenden Figuren noch näher eingegangen werden soll, umfaßt unter anderem einen Haltering 22, der die Düse 10 von außen umschließt und welcher durch ein Gestänge mit zwei zueinander senkrechten Führungsstangen 24, 54 geführt wird. Es ist möglich, den Abstand der Plasmadüse 10 von der Oberfläche 14 durch einen am Haltering 22 angebrachten Antrieb zu verändern, der in Figur 2 dargestellt ist.

Wird die Plasmadüse 10 in Richtung des Pfeils X parallel zur Oberfläche 14 über diese hinweg geführt, so überstreicht der Plasmastrahl 18 einen Längsstreifen der Schicht 12, so daß diese verascht wird. Die in Figur 1 linke Hälfte eines solchen Oberflächenstreifens 26, der durch den Plasmastrahl 18 abgetastet wurde, ist somit bereits verascht worden und chemisch von der Oberfläche 14 gelöst. Zum Entfernen des abgelösten Schichtmaterials 26 kann zusätzlich ein Hochdruckstrahl wie etwa ein Luftdruckstrahl, ein Wasserstrahl oder ein Dampfstrahl eingesetzt werden, der dem Plasmastrahl 18 auf seinem Weg nachfolgt. Ferner können dem Hochdruckstrahl Abrasivstoffe wie etwa Sand oder dergleichen beigemischt sein, die den Ablösungsprozeß unterstützen.

Die Plasmadüse 10 selbst weist eine rohrförmige, zur Mündung 16 hin verjüngte und elektrisch geerdete Außenelektrode 28 auf, an die sich am rückwärtigen Ende ein rohrförmges Gehäuse 30 aus elektrisch isolierendem Material wie etwa Keramik anschließt. Ein Deckel 32 des Gehäuses 30 bildet einen Einlaß 34, über den mit Hilfe eines Schlauches ein Arbeitsgas in die Plasmadüse eingeleitet werden kann. Bei diesem kann es sich beispielsweise um Luft, Argon oder ein anderes geeignetes Arbeitsgas wie etwa Stickstoff handeln. Im Inneren des Gehäuses 30 ist eine Dralleinrichtung 36 angeordnet, die die Form einer den Querschnitt des Gehäuses ausfüllenden Scheibe mit einem Kranz schräg in Umfangsrichtung angestellter Kanäle 38 hat und in der Mitte eine koaxial in die Außenelektrode 28 ragende Stiftelektrode 40 trägt.

Im Betrieb wird die Plasmadüse 10 von dem Arbeitsgas durchströmt, das durch die Dralleinrichtung 36 verdrallt wird und somit wirbelförmig durch die verhältnismäßig lange Außenelektrode 28 zur Mündung 16 strömt und dabei auf der Mittelachse der Außenelektrode 28 einen Wirbelkern bildet. An die Stiftelektrode 40 wird mit Hilfe eines Hochfrequenz-Spannungsgenerators 42 eine Spannung in der Größenordnung von 5 bis 30 kV angelegt, deren Frequenz beispielsweise 10 bis 20 kHz beträgt.

Die aus einem Keramikmaterial bestehende Wand des Gehäuses 30 bildet ein Dielektrikum, so daß es durch die an die Stiftelektrode 40 und die aus leitendem Material bestehende Dralleinrichtung 36 angelegte Spannung zunächst zu einer Koronaentladung kommt, durch die dann eine Bogenentladung zwischen der Stiftelektrode 40 und der Außenelektrode 28 gezündet wird. Der Lichtbogen 44 dieser Bogenentladung wird durch die verdrallte Strömung des Arbeitsgases mitgerissen und so daran gehindert, unmittelbar auf die Wand der Außenelektrode 28 überzuschlagen. Statt dessen wird der Lichtbogen im Wirbelkern der drallförmigen Strömung kanalisiert, so daß er sich erst in der Mündung 16 zur Außenelektrode verzweigt. Da der Abstand zwischen der Spitze der Stiftelektrode 40 und der Mündung 16 der Plasmadüse 10 deutlich größer ist als der Durchmesser der Mündung 16, wird eine verhältnismäßig lange Entladungsstrecke gebildet, in der das mit hoher Geschwindigkeit im Wirbelkern rotierende Arbeitsgas in innige Berührung mit dem Lichtbogen kommt. Auf diese Weise wird außerhalb des thermischen Plasmas des Lichtbogens ein Sekundärplasma erzeugt, das stark mit Ionen, angeregten Atomen und Molekülen und hochreaktiven Radikalen angereichert ist. Dieses Sekundärplasma wird durch die Mündung 16 ausgeblasen und bildet den Plasmastrahl 18, der sich aufgrund der Verdrallung gut an die Schicht 12 auf der Oberfläche 14 anschmiegt. Durch dieses Anschmiegen wird der Plasmastrahl 18 beim Auftreffen auf die Schicht 12 verbreitert. Diese Aufweitung des Plasmastrahls 18 bestimmt die Breite des von der Plasmadüse 10 abgetasteten Streifens.

Zur Messung und Regelung des Abstandes der Plasmadüse von der Oberfläche dient ein Abstandssensor 46. Darüber hinaus läßt sich die Färbung des Plasmastrahls in dem Bereich, in dem die Veraschungsreaktion stattfindet, durch einen Farbsensor 48 analysieren. Die Farbe und insbesondere ein Farbumschlag der Plasmaflamme gibt Aufschluß darüber, ob die Veraschung erfolgreich durchgeführt wird. Die Bewegung der Plasmadüse 10, die Intensität des Plasmastrahls 18 und/oder der Abstand der Plasmadüse 10 von der Oberfläche 14 lassen sich somit in Abhängigkeit von der Verfärbung der Plasmaflamme regeln. Beispielsweise kann verhindert werden, daß die Plasmadüse 10 zu schnell über die Oberfläche 14 hinweggeführt wird und nicht veraschte Reste der Lackschicht 12 auf der Oberfläche 14 verbleiben.

Abweichend von der hier dargestellten Ausführungsform der Plasmadüse 10 kommt es in Betracht. Plasmadüsen anderer Konstruktion zu verwenden, die für den hier dargestellten Einsatz vorteilhaft sind. Beispielsweise kann die Mündung 16 der Düse als ein quer zur Mittelachse der Plasmadüse 10 verlaufender schmaler Schlitz ausgebildet sein, so daß die Breite des abgetasteten Streifens erhöht werden kann. Ferner ist es denkbar, die Plasmadüse 10 exzentrisch in einem Rotationskopf anzuordnen, dessen Rotationsachse parallel zur Mittelachse der Plasmadüse 10 verläuft, so daß die Düse 10 während der Translationsbewegung in Pfeilrichtung X gleichzeitig um die Rotationsachse herumgeführt wird. Die Breite des abgetasteten Streifens kann auch dadurch vergrößert werden, daß die Mündung 16 der Plasmadüse 10 gegenüber deren Mittelachse abgewinkelt ist und rotiert. Eine konische oder fächerförmige Aufweitung des Plasmastrahls 18 erweist sich zur Verbreiterung des abgetasteten Streifens ebenfalls als hilfreich. Im Hinblick auf solche vorteilhaften Ausführungsformen wird insbesondere auf die WO 01/43512 A1, die WO 99/52333 sowie die EP 1 067 829 A2 verwiesen.

Ferner läßt sich der Veraschungsprozeß unterstützen, indem ein Additiv in den Plasmastrahl 18 eingespeist wird. Als geeignetes Additiv kommt beispielsweise Hexamethylendisiloxan (HMDSO) in Betracht. Das Additiv kann in Form einer vernebelten Flüssigkeit, also als Aerosol in den Strahl 18 injiziert werden, so daß es beim Auftreffen auf die Lackschicht 12 chemisch mit dem Polymer reagiert. Hierzu ist die Plasmadüse 10 abweichend von der in Figur 1 dargestellten Ausführungsform mit einer geeigneten Zufuhreinrichtung zu versehen, wie beispielsweise einer Lanze oder einem Röhrchen, das im Mündungsbereich der Plasmadüse 10 in den Plasmastrahl 18 mündet. Entsprechende Ausführungsformen sind in der WO 01/32949 A1 offenbart.

Im folgenden soll näher auf einen Halter 20 eingegangen werden, der dazu geeignet ist, eine ebene Oberfläche effizient zu bearbeiten und insbesondere an einer Fassade oder Wand eines Gebäudes eingesetzt zu werden. Der in Figur 2 dargestellte Halter 20 umfaßt zu diesem Zweck einen Rahmen 50, der in einer Ebene parallel zu der Oberfläche 14 auf dieser aufliegt. Der Rahmen 50 ist rechteckig und hält in seinem Inneren eine Führungsstange 24, die parallel zu seinen Längsseiten verläuft. Die Führungsstange 24 ist in den kürzeren Seitenabschnitten 52 des Rahmes 50 durch eine Antriebseinrichtung 53 beweglich gehalten, so daß sie in einer Richtung senkrecht zu ihrer Längsachse entlang der Seitenabschnitte 52 bewegt werden kann. Senkrecht zu dieser ersten Führungsstange 24 erstreckt sich eine zweite Führungsstange 54 parallel zu den kürzeren Seitenabschnitten 52, welche durch eine weitere Antriebseinrichtung 55 entlang des längeren Rahmenabschnitts 56 bewegt werden kann. An den Führungsstangen 24,54 ist der Haltering 22 jeweils durch Führungen 58 verschiebbar befestigt, so daß er durch eine Bewegung der zweiten Führungsstange 54 entlang der ersten Führungsstange 24 in der Richtung X bzw. durch eine Bewegung der ersten Führungsstange 24 entlang der zweiten Führungsstange 52 in der dazu senkrechten Richtung Y verschoben wird. Auf diese Weise kann die Plasmadüse 10 in dem Rahmen 50 in einer Ebene entlang der Koordinaten X, Y hin und her bewegt werden, so daß sich der gesamte Flächenbereich von der Plasmadüse 10 abtasten läßt, der von dem Rahmen 50 umschlossen wird.

Um diesen Flächenbereich möglichst effizient zu bearbeiten, kann die Bewegung insbesondere so erfolgen, daß zunächst ein Streifen in Richtung X in der in Figur 1 beschriebenen Weise abgetastet wird, also in Figur 2 von links nach rechts entlang der ersten Führungsstange 24, bis die Plasmadüse 10 an dem rechten Rahmenabschnittt 52 anschlägt. Dann wird die Plasmadüse 10 um eine Streifenbreite versetzt, indem die erste Führungsstange 24 entlang der zweiten Führungsstange 54 verfahren wird, und die Abtastrichtung wird umgekehrt, so daß sich die Plasmadüse 10 von rechts nach links bewegt. Es handelt sich also um eine hin- und hergehende Bewegung, wobei bei jedem Richtungswechsel ein Versatz um maximal eine Streifenbreite stattfindet. Diese Bewegung kann beispielsweise durch eine Steuereinrichtung mit einem Steuerprogramm gesteuert werden.

Ferner umfaßt der Haltering 22 einen Antrieb 57, durch welchen sich die Plasmadüse 10 in einer Richtung senkrecht zur Rahmenebene bewegen läßt, so daß der Abstand der Mündung 16 der Düse 10 von der Oberfläche 14 verstellbar und unter Einbeziehung des Signals des Abstandssensors 46 und gegebenenfalls des Farbsensors 48 aus Figur 1 regelbar ist.

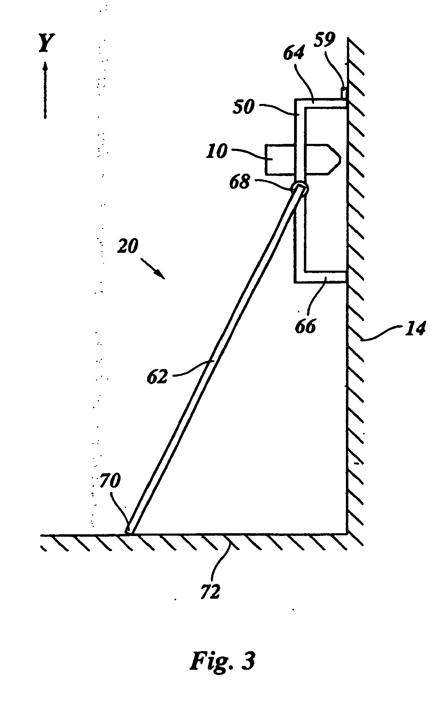

An den oberen beiden Ecken des Rahmens 50 sind Ösen 59 angebracht, durch welche der Rahmen 50 durch geeignete Mittel wie Haken oder dergleichen an der Oberfläche 14 aufgehängt werden kann. Alternativ ist es möglich, den Rahmen 50 lediglich an die Oberfläche 14 anzulehnen. Zu diesem Zweck sind an den gegenüberliegenden kürzeren Seitenabschnitten 52 des Rahmens 50 zwei Stützstangen 60, 62 angebracht, die dazu dienen, den Rahmen 50 in seiner Betriebsposition an der Fassaden- oder Wandoberfläche zu halten. Dies wird in der Seitenansicht in Figur 3 deutlich. Der Rahmen 50 stützt sich durch Abstandshalter 64, 66 auf solche Weise gegen die Oberfläche 14 ab, daß die Rahmenebene parallel zur Oberfläche 14 liegt und die Plasmadüse 10 in einem geeigneten Abstand zur Oberfläche 14 gehalten werden kann. Die parallelen Stützstangen 60, 62 sind durch Gelenke 68 am Rahmen 50 angebracht und gegenüber der Rahmenebene abgewinkelt und ruhen mit ihren unteren Enden 70 auf dem Boden 72 im Bereich vor der Oberfläche 14, so daß die Stützstangen 60, 62, die Oberfläche 14 und der Boden 72 ein rechtwinkliges Dreieck einschließen. Durch geeignete Mittel kann ein Abrutschen der Stützstangen 60, 62 auf den Boden 72 verhindert werden, so daß der Rahmen 50 in seiner gegen die Oberfläche 14 gelehnten Position gehalten wird. Die Stützstangen 60, 62 können ferner teleskopartig längenverstellbar sein, so daß die Höhe, in welcher der Rahmen 50 sich an die Oberfläche 14 anlehnt, einstellbar ist.

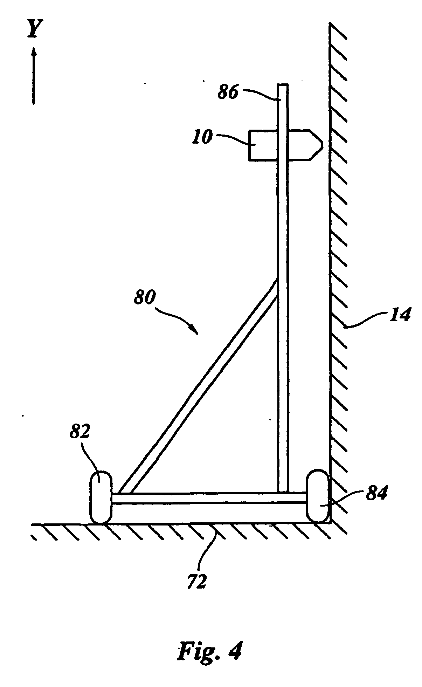

Es ist selbstverständlich möglich, ein Gestell zum Halten des Rahmens an der Wand auf andere Weise auszubilden, etwa mit vor der Wand angebrachten Gestellen oder dergleichen. Eine besonders vorteilhafte Ausführungsform ist in Figur 4 dargestellt. In diesem Fall umfaßt der Halter einen Wagen 80, der durch Räder 82, 84 auf dem Boden 72 ruht und entlang der Fassade oder Wand verfahrbar ist. Die Plasmadüse 10 wird hier nicht in einem Rahmen bewegt, sondern ist lediglich an einer senkrechten Führungsschiene 86 angebracht, die eine Auf- und Abbewegung entlang der Koordinate Y parallel zur senkrechten Oberfläche 14 ermöglicht. Durch diese Bewegung in Verbindung mit einem schrittweisen Verfahren des Wagens 80 kann ein Flächenbereich der Oberfläche 14 durch eine streifenweise Abtastung bearbeitet werden, die dem oben beschriebenen Abtastvorgang entspricht. Insbesondere bei dieser Anordnung kann es sich als erforderlich erweisen, bei jedem Verfahrvorgang des Wagens 80 den Abstand der Mündung 16 der Plasmadüse 10 von der Oberfläche 14 zu messen und gegebenenfalls zu korrigieren, um beim Verfahren auftretende Toleranzen im Abstand zwischen der Führungsschiene 86 und der Oberfläche 14 auszugleichen.

## Patentansprüche

1. Verfahren zum Entfernen einer Lackschicht (12) auf Polymerbasis von der Oberfläche (14) einer Fassade oder einer Wand, **dadurch gekennzeichnet, dass** die Lackschicht (12) durch einen auf die Oberfläche (14) gerichteten Strahl (18) eines atmosphärischen Plasmas verascht wird.

2. Verfahren gemäss Anspruch 1, **dadurch gekennzeichnet, dass** der Plasmastrahl (18) durch eine Hochfrequenzentladung in einer verdrallten Strömung eines Arbeitsgases erzeugt wird.

3. Verfahren gemäss Anspruch 1 oder 2, **dadurch gekennzeichnet, dass** in den Plasmastrahl (18) ein die Veraschung förderndes Additiv eingespeist wird.

4. Verfahren gemäss einem der vorhergehenden Ansprüche, **dadurch gekennzeichnet, dass** zumindest eine Plasmadüse (10) zur Erzeugung eines Plasmastrahls (18) streifenweise über die Oberfläche (14) hinweg bewegt wird.

5. Verfahren gemäss Anspruch 4, **dadurch gekennzeichnet, dass** die Plasmadüse (10) jeweils nach dem Abtasten eines Streifens quer zur Abtastrichtung maximal um eine Streifenbreite versetzt wird und die Abtastrichtung umgekehrt wird.

6. Verfahren gemäss Anspruch 4 oder 5, **dadurch gekennzeichnet, dass** der Abstand der Plasmadüse (10) von der Oberfläche (14) durch einen Abstandssensor (46) gemessen und geregelt wird.

7. Verfahren gemäss Anspruch 4, 5 oder 6, **dadurch gekennzeichnet, dass** die Färbung des Plasmastrahls (18) in dem Bereich, in welchem die Veraschungsreaktion stattfindet, durch einen Farbsensor (48) analysiert wird und dass die Bewegung der Plasmadüse (10), die Intensität des Plasmastrahls (18) und/oder der Abstand der Plasmadüse (10) von der Oberfläche in Abhängigkeit von der Verfärbung geregelt werden.

8. Vorrichtung zur Durchführung des Verfahrens gemäss einem der vorstehenden Ansprüche, mit mindestens einer Plasmaduse (10) zur Erzeugung eines Strahls (18) eines atmosphärischen Plasmas, mit einem Halter (20), in welchem die Plasmadüse (10) in einer Position gehalten wird, in der ihre Mündung (16) auf die Oberfläche (14) gerichtet ist, welcher Halter (20) zumindest eine Antriebseinrichtung (53, 55) umfasst, durch welche die Plasmadüse (10) über die Oberfläche (14) hinweg bewegt werden kann, **dadurch gekennzeichnet, dass** ein Abstandssensor zur Messung des Abstandes der Plasmadüse (10) von der Oberfläche (14) vorgesehen ist.

9. Vorrichtung gemäss Anspruche 8, **gekennzeichnet durch** einen Farbsensor zur Analyse der Färbung des Plasmastrahls (18) in dem Bereich, in welchem die Veraschungsreaktion stattfindet.

10. Vorrichtung gemäss Anspruche 8 oder 9, **dadurch gekennzeichnet, dass** der Halter (20) einen auf der Oberfläche (14) aufliegenden Rahmen (50) umfasst, und dass die Antriebseinrichtung(en) (53, 55) zur zweidimensionalen Bewegung der Plasmadüse (10) innerhalb des Rahmens (50) in einer Ebene parallel zur Oberfläche (14) vorgesehen ist bzw. sind.

11. Vorrichtung gemäss Anspruch 10, **dadurch gekennzeichnet, dass** der Rahmen (50) an der Fassade oder Wand aufhängbar ist.

12. Vorrichtung gemäss Anspruch 10 oder 11, **dadurch gekennzeichnet, dass** an dem Rahmen (50) Stützen (60, 62) angebracht sind, die gegenüber der Ebene des Rahmens (50) abgewinkelt sind und auf dem Boden (72) ruhen und durch welche der Rahmen (50) in einer gegen die Fassade oder Wand angelehnten Position gehalten wird.

13. Vorrichtung gemäss Anspruch 10, **dadurch gekennzeichnet, dass** der Halter (20) einen Wagen (80) umfasst, der auf einer Bodenfläche (72) entlang der Fassade oder Wand verfahrbar ist, welcher Wagen (80) mit einer Führungseinrichtung (86) zur senkrechten Bewegung der Plasmadüse (10) vorgesehen ist.

## Claims

1. Process for removing a coat of a polymer-based lacquer (12) from the surface (14) of a façade or a wall, **characterised** wherein the coat of lacquer (12) is incinerated by the beam (18) of an atmospheric plasma directed onto the surface (14)

2. Process according to claim 1, **characterised** wherein the plasma beam (18) is generated by a high frequency discharge in a helically twisted flow of working gas.

3. Process according to claims 1 or 2, **characterised** wherein an incineration stimulating additive is fed in to the plasma beam (18).

4. Process according to one of the preceding claims, **characterised** wherein at least one plasma nozzle (10) is moved over the surface (14) in a striped pattern to generate a plasma beam (18).

5. Process according to claim 4, **characterised** wherein the plasma nozzle (10) is displaced each time by one stripe width maximum transversely to the sweep and the sweep direction is reversed.

6. Process according to claims 4 or 5, **characterised** wherein the displacement of the plasma nozzle (10) from the surface (14) is measured and controlled by a close proximity sensor (46)

7. Process according to claims 4, 5 or 6, **characterised** wherein the colour of the plasma beam (18) in the area in which the incineration reaction takes place is analysed by a colour sensor (48) and wherein the plasma nozzle (10) movement, the intensity of the plasma beam (18) and/or the distance of the plasma nozzle (10) from the surface are controlled depending upon the change of colour.

8. Device for carrying out the process according to one of the preceding claims, having at least one plasma nozzle (10) for generating a beam (18) of an atmospheric plasma, having a holder (20), in which the plasma nozzle (10) is held in a position in which its mouth (16) is directed onto the surface (14), which holder (20) accommodates at least one drive device (53, 55), by which the plasma nozzle (10) may be moved over the surface (14), **characterised** wherein a close proximity sensor is provided for measuring the distance of the plasma nozzle (10) from the surface (14).

9. Device according to claim 8, **characterised by** a colour sensor for analysing the colour of the plasma beam (18) in the area in which the incineration reaction takes place.

10. Device according to claims 8 or 9, **characterised** wherein the holder (20) accommodates a frame (50) mounted on the surface (14), and the drive device(s) (53, 55) for moving the plasma beam (10) in two dimensions inside the frame is or are provided in a plane parallel to the surface (14).

11. Device according to claim 10, **characterised** wherein the frame (50) is able to be suspended on the façade or wall.

12. Device according to claims 10 or 11, **characterised** wherein supports (60, 62) are attached to the frame (50), which supports are offset from the plane of the frame and rest on the floor and by which the frame (50) is held in a position leaning against the façade or wall.

13. Device according to claim 10, **characterised** wherein the holder (20) accommodates a carriage (80), which is able to traverse along the façade or wall, which carriage (80) is provided with a guidance device (86) for vertical movement of the plasma nozzle (10).

## Revendications

1. Procédé d'enlèvement d'une couche de peinture (12) à base de polymère de la surface (14) d'une façade ou d'une paroi, **caractérisé en ce que** la couche de peinture (12) est incinérée par un jet (18) d'un plasma atmosphérique, orienté vers la surface (14).

2. Procédé selon la revendication 1, **caractérisé en ce que** le jet de plasma (18) est généré par une décharge haute fréquence dans un courant torsadé d'un gaz utile.

3. Procédé selon la revendication 1 ou 2, **caractérisé en ce qu'**un additif favorisant l'incinération est injecté dans le jet de plasma (18).

4. Procédé selon l'une quelconque des revendications précédentes, **caractérisé en ce qu'**au moins une buse à plasma (10), destinée à générer un jet de plasma (18), est déplacée en bande au-delà de la surface (14).

5. Procédé selon la revendication 4, **caractérisé en ce que** la buse à plasma (10), respectivement après la détection d'une bande transversalement à la direction de détection, est décalée au maximum d'une largeur de bande, et la direction de détection est inversée.

6. Procédé selon la revendication 4 ou 5, **caractérisé en ce que** la distance entre la buse à plasma (10) et la surface (14) est mesurée et réglée par un capteur de distance (46).

7. Procédé selon la revendication 4, 5 ou 6, **caractérisé en ce que** la coloration du jet de plasma (18) est analysée dans la zone dans laquelle a lieu la réaction d'incinération par un capteur de couleur (48) et **en ce que** le déplacement de la buse à plasma (10), l'intensité du jet de plasma (18) et/ou la distance entre la buse à plasma (10) et la surface sont réglés en fonction de la coloration.

8. Dispositif de réalisation du procédé selon l'une quelconque des revendications précédentes, comprenant au moins une buse à plasma (10) destinée à générer un jet (18) d'un plasma atmosphérique, comprenant un support (20) dans lequel la buse à plasma (10) est maintenue dans une position dans laquelle son embouchure (16) est orientée vers la surface (14), lequel support (20) comporte au moins un système d'entraînement (53, 55), par lequel la buse à plasma (10) peut être déplacée au-delà de la surface (14), **caractérisé en ce qu'**il est prévu un capteur de distance destiné à mesurer la distance entre la buse à plasma (10) et la surface (14).

9. Dispositif selon la revendication 8, **caractérisé par** un capteur de couleur destiné à analyser la coloration du jet de plasma (18) dans la zone dans laquelle a lieu la réaction d'incinération.

10. Dispositif selon la revendication 8 ou 9, **caractérisé en ce que** le support (20) comporte un cadre (50) reposant sur la surface (14), et **en ce que** le(s) système(s) d'entraînement (53, 55) est et/ou sont prévu(s) pour le déplacement bidimensionnel de la buse à plasma (10) à l'intérieur du cadre (50) dans un plan parallèlement à la surface (14).

11. Dispositif selon la revendication 10, **caractérisé en ce que** le cadre (50) peut être accroché à la façade ou à la paroi.

12. Dispositif selon la revendication 10 ou 11, **caractérisé en ce que** des appuis (60, 62) sont aménagés sur le cadre (50), lesquels sont coudés par rapport au plan du cadre (50) et reposent sur le sol (72) et grâce auxquels le cadre (50) est maintenu dans une position adossée contre la façade ou la paroi.

13. Dispositif selon la revendication 10, **caractérisé en ce que** le support (20) comporte un chariot (80), qui est mobile sur une surface de fond (72) le long de la façade ou de la paroi, lequel chariot (80) est prévu avec un système de direction (86) destiné à déplacer verticalement la buse à plasma (10).
